(19) Europäisches Patentamt
European Patent Office
Office européen des brevets

(11) **EP 4 752 912 A1**

(12) **EUROPEAN PATENT APPLICATION**

(43) Date of publication:
**03.06.2026 Bulletin 2026/23**

(51) International Patent Classification (IPC):
***H01B 7/282*** (2006.01)

(21) Application number: **25200245.6**

(22) Date of filing: **04.09.2025**

(52) Cooperative Patent Classification (CPC):
**H01B 7/2825;** Y02A 30/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.09.2024 NO 20240910**

(71) Applicant: **Nexans
92400 Courbevoie (FR)**

(72) Inventor: **Johanson, Audun
0661 Oslo (NO)**

(74) Representative: **Acapo Onsagers AS
Edvard Griegs vei 1
5059 Bergen (NO)**

(54) **A DYNAMIC HIGH-VOLTAGE SUBMARINE CABLE AND METHOD FOR PRODUCING A DYNAMIC HIGH-VOLTAGE SUBMARINE CABLE**

(57) A dynamic high-voltage submarine cable comprises at least one cable core comprising an electrical conductor and an electrically insulating layer (4) radially surrounding outside of the electrical conductor (3), and a water barrier radially surrounding outside of the cable core (2). The water barrier comprises a corrugated metal tube (10) having an inner diameter (20) larger than 90mm and a corrugation pitch (p) in a range of 4 - 12 mm, characterized in that the metal tube has a wall thickness (T) in a range of 0.1 - 1,2 mm and a corrugation depth (d) of more than 5 mm.

Fig. 4a

EP 4 752 912 A1

## Description

## Field of the invention

The present invention relates to a water barrier for dynamic power cables and in particular high voltage dynamic power cables for submarine applications.

## Background

As the world's maritime infrastructure is developing, the use of submarine cables to deliver electric power below, above, in or across bodies of water is rapidly increasing. Submarine power cables are slender structures and are commonly suspended between a floating unit located at the surface of a body of water, from where electric power is typically delivered to equipment on the seabed. The range of applications for submarine power cables is wide, comprising any sea-based installation required to receive or transmit electricity such as oil and gas production installations to renewable energy production sites such as offshore wind farms. The submarine power cables are thus typically exposed to mechanical loads imposed during dynamic movements of the cable from wave motions and underwater currents. In some instances, the offshore structure itself can induce such tension and curvature variations in the cable. A result of such variations is accumulation of fatigue damage in the cable components that eventually may lead to cable failure.

The desired lifetime of a submarine power cable is between 10-50 years, and all components in the cable should therefore sustain exposure to mechanical loads for long periods of time.

Submarine power cables are required to have a water barrier sheathing to keep the cable core dry. The water barrier sheathing should completely block convection or diffusion of water, as an ingress of moisture can ultimately lead to a failure of the cable.

A conventional water barrier sheathing is typically manufactured by a continuous or discontinuous extrusion of a seamless tube, and often comprises lead or lead alloys due to their extrudability and high ductility.

However, these conventional materials do not typically have good resistance to material fatigue, and often exhibit cracks when used in heavier cables, or when deployed in dynamic applications.

High voltage dynamic cables using a water barrier made of a longitudinally welded sheath (LWS) or metal-polymer composite consisting of a metal layer laminated between two layers of insulating or non- insulating polymer layers can reach their limit in terms of operational lifetime in a dynamic setting- in particular for shallow waters, large power phase cross-section or in particular harsh environments.

EP2896053 describes using a corrugated metallic water barrier to provide better fatigue properties to the metallic water barrier. This solution, however, is designed for use in shallow water and for power cables with a diameter of 50-90 mm, which is only useful for low power cables.

EP4350717 discusses the challenges with using corrugated metallic water barriers e.g., for water depths of more than 1500 m or more than 2000 m. This makes using corrugated metallic water barriers problematic because of the higher hydrostatic pressure at deep sea, which may cause buckling of the corrugated metallic water barrier. The document describes a dynamic submarine power cable where a metallic water blocking layer is arranged around the insulation system. The metallic water blocking layer is formed by a first section that is a corrugated metallic water blocking layer and a second section that is a smooth metallic water blocking layer.

New large transmission capacity requirements for, for example floating wind export cables, require increased voltage; typically, beyond 225 kV for AC or 320 kV for DC cables. This increases the needed insulation thickness which increases the mechanical stresses on the water barrier.

Thus, there is a need for dynamic subsea cables which resolve one or more of the deficiencies of conventional cables and meet current industry performance requirement for dynamic subsea cables.

The present invention has solved the above mentioning need

## SUMMARY OF THE INVENTION

Increased diameter leads to the cable being more vulnerable to high pressure and using the previously known corrugation methods will make the cable prone to failure.

The applicant has found that due to this vulnerability, the characteristics of the corrugation employed for water barriers are more critical than previously known and has developed a dynamic high-voltage submarine cable that takes this into account.

A dynamic high-voltage submarine cable comprises in one aspect

- at least one cable core comprising an electrical conductor and an electrically insulating layer radially surrounding the electrical conductor, and
- a water barrier radially surrounding the cable core,

wherein the water barrier comprises a corrugated metal tube having an inner diameter larger than 90mm and a corrugation pitch (p) in a range of 4 - 12 mm, wherein the corrugated metal tube has a wall thickness (T) in a range of 0.1 - 1,2 mm and a corrugation depth (d) of more than 5 mm.

It is also provided a method for producing a dynamic high-voltage submarine cable comprising

- at least one cable core comprising an electrical conductor and an electrically insulating layer radially surrounding the electrical conductor, and
- a water barrier comprising a metal tube with an inner diameter larger than 90mm and a wall thickness (T) in a range of 0.1 - 1,2 mm radially surrounding the cable core.

The method comprises in one aspect:
corrugating at least a section of the metal tube with a corrugation pitch (p) in a range of 4 - 12 mm, and a corrugation depth (d) of more than 5 mm.

The corrugated metal tube has an inner diameter larger than 90 mm, a corrugation pitch (p) of 7-9 mm, a wall thickness of 0,4-0,8 mm and a corrugation depth (d) of more than 5 mm.

In one aspect, the corrugated metal tube has an inner diameter larger than 100 mm, a corrugation pitch (p) in a range of 4 - 12 mm, a wall thickness (T) in a range of 0,5 - 1,2 mm and a corrugation depth (d) of more than 5 mm.

The dynamic high-voltage submarine cable is for example configured to AC voltages over 132kV, such as 230kV or 320kV.

As the diameter increases, the mechanical loads increase and thus the corrugation depth and/or the wall thickness and/or the corrugation pitch should be adapted to this.

In one aspect, the ratio of the inner diameter (Di) to the corrugation pitch (p) of the corrugated metal tube is >6. In another aspect, the ratio of the inner diameter (Di) to the corrugation depth (d) of the corrugated metal tube is <20, or in yet another aspect the ratio of the inner diameter (Di) to the corrugation depth (d) of the corrugated metal tube is <16.

The water barrier may also comprise a smooth metal tube, where the corrugated metal tube and the smooth metal tube are connected in series to each other along the axis of the dynamic high-voltage submarine cable.

The corrugated metal tube and the smooth metal tube may be connected in series to each other, ie. jointed together, by means of a transition section in order to ensure that no excessive forces or strains are introduced in the transition/joint between corrugated and smooth lengths of metal tube.

The length of the corrugated metal tube can thus be less than the total length of the cable, and the corrugated metal tube may be located where most strain is expected on the cable, such as for example near at least one end of the cable. In other embodiments, the length of the corrugated metal tube may have be other lengths, for example be 10% of the total length of the cable.

In one aspect, the water barrier comprises a laminate tape comprising a first layer made of an adhesive polymer material and a second layer made of metal. The laminate tape may be corrugated or smooth.

In one aspect, the dynamic high-voltage submarine cable further comprises an outer sheath arranged radially outside of the water barrier, ie. surrounding the water barrier. This outer sheath may be corrugated or smooth.

The dynamic high-voltage submarine cable may comprise a filler material between the water barrier and the outer sheath. Such a filler material can fill any gaps and provides extra support, thereby providing further strength of the dynamic high-voltage submarine cable and longer duration. Correspondingly, similar filler material may also be provided between other layers of the dynamic high-voltage submarine cable.

BRIEF DESCRIPTION OF THE DRAWINGS

In the following description this invention will be further explained by way of exemplary embodiments shown in the drawings:

Fig. 1 shows one example of a situation where the present invention will be applicable

Fig. 2 schematically illustrates an example of a cross section of dynamic power cable with one cable core.

Fig. 3 schematically illustrates an example of a cross section of dynamic power cable with three cable cores.

Fig. 4a and 4b schematic illustrates a longitudinal cross section through the corrugated water barrier; Di (inner diameter), p (pitch), D (corrugation depth), A (amplitude)

Fig. 5 illustrates an annular arranged corrugation and a helical arranged corrugation.

Fig. 6a and 6b illustrate schematically two water barriers which each comprise corrugated and not-corrugated sections.

Fig.7a and 7b illustrates an embodiment where water barrier comprises laminate tape.

DETAILED DESCRIPTION

The term "high voltage" as applied herein refers to a voltage above 36kV such as in the range 50 kV to 800 kV.

The term "dynamic cable" is applied herein to refer to cables that in use are exposed to movement.

The pitch of a helix, or the lay length, is the distance between any two points on the helix that are exactly one turn apart, measured parallel to the axis.

The corrugation pitch is the distance between two neighboring maximums of the corrugation, measured parallel to the axis.

$$\lambda = \arctan\left(\frac{B}{\pi D_0}\right)$$

λ is the angle of the corrugation in a helix.

B is the pitch of the helix

$D_0$ is the largest diameter encircling the corrugated metal tube.

A submarine dynamic power cable is a power cable installed and allowed to move between two fixed supports, for example one support at the ocean floor and one at the sea level. The movement of the floating installation will induce mechanical load and fatigue on the dynamic cable.

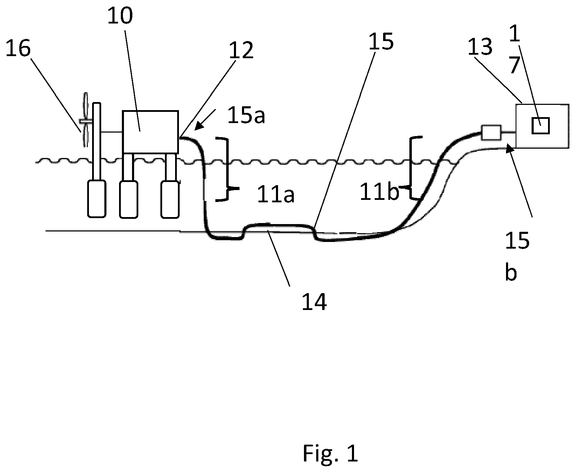

Figure 1 illustrates one example of a situation where the present invention will be applicable. A power cable 15 is here used to transfer power from an offshore wind power plant 10 having a wind turbine 16 to a receiving station 13 onshore. The power cable 15 hangs from, or is suspended from, the offshore power plant 10 at a suspension point 12, from where it has a section 11a downwards reaching towards the seabed 14. The power cable 15 then runs along on the seabed 14 and follows a section 11b with gentler slope from the seabed 14 to the receiving station 13.

A first end 15a of the power cable 15 is connected to the offshore wind power plant 10, while a second end 15b of the power cable 15 is connected to the receiving station 13.

In examples such as this wind plant example, the offshore wind power plant 10 may be several kilometers or several tens of kilometers from shore. In use the conductors of the power cable 15 may carry very high voltages, of the order of hundreds of kilovolts. Thus, good quality insulation is required, and it is important that the cable is substantially defect free. Further, the use of strengthening elements surrounding the power cable 15 will prevent heat from dissipating. This may lead to hot spots that may damage the power cable 15.

Several parts of the power cable 15 can be exposed to mechanical loads and movement, and this is the case particularly for the ends 15a, 15b.

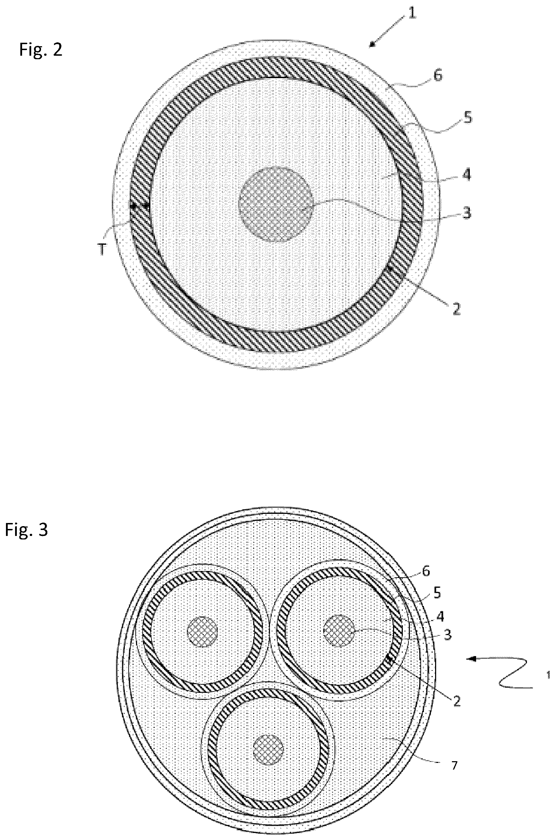

The invention is described further with reference to Figure 2 and Figure 3 of the drawings, which shows a schematic of the cross-section of an embodiment of a dynamic high-voltage submarine cable.

Fig. 2 schematically illustrates an example of a cross section of dynamic power cable 1, where the cable 1 is shown with one cable core 2. This invention is however not limited to a one-core cable, and the cable 1 may comprise two or any higher number of cores 2, as is deemed suitable for the cable's purposes. Accordingly, Fig.3 illustrates an example of a dynamic power cable 1 cross section comprising three cable cores 2.

Each core 2 comprises an electrical conductor 3 arranged in the centre of the core 2, and an electrically insulating layer radially surrounding each conductor 3.

The electrical conductor can have different cross sections depending on the intended use of the cable, for example in the range of 1200 mm²-1800mm². Specific examples are AC cables with cross section of 1800mm² in cables for 132kV, 1200 mm² in cables for 230 kV, and DC cables with cross section of 1400 mm² in cables for 230kV.

These examples result typically in cable cores with approximately 85 mm outer diameter.

Outside the first electrically insulating layer 4, though not illustrated in the figures, there may be arranged a layer of sealing material disposed between the electrically insulating layer 4 and a water barrier 5, having a thickness T. This sealing material swells upon contact with water thereby working as an extra redundancy measure to prevent ingress of moisture in case of a crack or other failure in the water barrier 5.

In some embodiments, there may also be an extruded fibre reinforced thermoplastic composite core sheath 6 radially surrounding the water barrier 5.

This fibre reinforced thermoplastic composite core sheath 6 may be extruded radially onto the water barrier 5. This extrusion process is not detailed further herein since this is a well-known process in the art and will be apparent to the person skilled in the art.

There may also be employed other methods, for example may an intermediate adhesive layer bind the water barrier to the extruded inner thermoplastic composite core sheath 6.

The power cable may further comprise a fibre reinforced thermoplastic composite sheath radially surrounding the inner extruded thermoplastic composite core sheath 6.

The fibre reinforced thermoplastic composite sheath outside the inner thermoplastic composite core sheath 6 may be a fibre reinforced thermoplastic composite sheath comprising winding fibres embedded in a polymer.

The further fibre reinforced thermoplastic composite sheath may be winded radially onto the inner thermoplastic composite core sheath 6, alternatively there may be an intermediate extruded thermoplastic sheath between the fibre reinforced thermoplastic composite sheath 6 and the further fibre reinforced thermoplastic composite sheath comprising winding fibres.

It should be noted that the cable 1, and variations thereof, may comprise additional layers, or filling material 7, as exemplified in Fig. 3, arranged radially outside each conductor 3 or the at least one cable core 2, which will not be described further herein. These layers and materials may be arranged inside, in-between or outside the already mentioned layers herein, and may comprise for example additional insulating, semiconducting, conducting, shielding and armouring layers that are well known in the art.

The dynamic power cable may be a direct current (DC) power cable or an alternating current (AC) power cable.

The dynamic power cable may be a high voltage dynamic power cable.

In one aspect, one cable core 2 may be put together with several other cable cores, as is illustrated in Fig. 3.

For example, the dynamic power cable may comprise at least three cable cores 2 wherein each cable core is an extended cable core comprising a water barrier 5 radially surrounding the cable core 2.

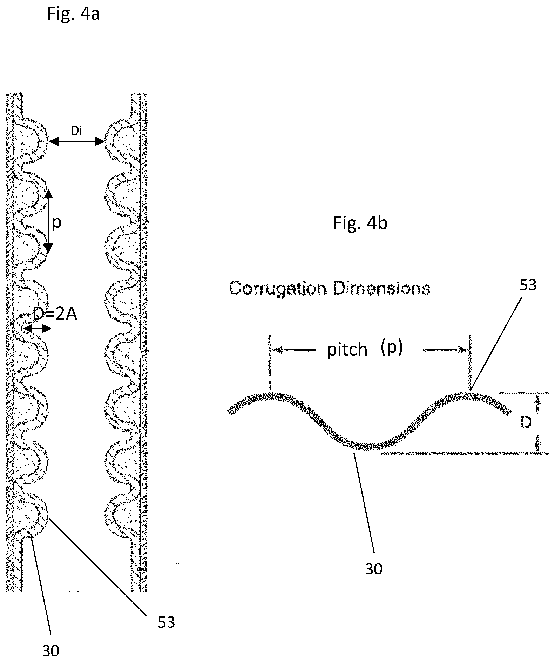

The water barrier comprises a corrugated metal tube 30, such as illustrated in figure 4a and 4b. Figure 4a shows a schematic illustration of a longitudinal cross section through the corrugated metal tube of the water barrier, where Di is inner diameter of the corrugated metal tube, p is the pitch, D is the corrugation depth, and A is the amplitude of the corrugation. Figure 4b shows the details of the corrugation characteristics more clearly.

The inner diameter Di of the corrugated metal tube is the distance between maximums 53 of the corrugation across the metal tube, measured perpendicular to the axis of the metal tube.

The corrugation depth D is the distance between a corrugation maximum and the closest minimum of the corrugation, measured perpendicular to the axis.

The corrugation pitch p is the distance between two neighboring maximums 53 of the corrugation, measured parallel to the axis.

The corrugated metal tube 30 of the water barrier 5 has in one embodiment an inner diameter Di larger than 90mm and a corrugation pitch p in a range of 4 - 12 mm, a wall thickness T in a range of 0.5 - 1,2 mm and a corrugation depth d of more than 5 mm.

The material of the corrugated metal tube 30 may be a thin metal sheet material of low bending stiffness but high membrane stiffness. The corrugation further improves bending stiffness with only a minimal increase in weight and cost.

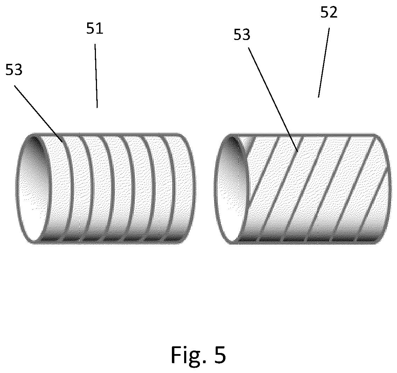

The corrugation of the metal tube of the water barrier can have various geometries as described above. Further, the corrugation can be arranged annular or helically. Figure 5 illustrates an annular arranged corrugation 51 and a helical arranged corrugation 52. The annular arranged corrugation 51 means that the corrugation crests 53, ie. the parts extending along the maximums of the corrugation geometry, are parallel to a cross section of the metal tube perpendicular to the axis of the metal tube, while the helical arranged corrugation means that the corrugation crests have an angle larger than 0 and smaller than 90 degrees to the cross section of the metal tube perpendicular to the axis of the metal tube. In other words, the annular corrugation 51 can be described as circumferential and the helical corrugation 52 can be described as spiral shaped.

It has been shown that beneficial fatigue properties and improved resistance to hydrostatic pressure can be achieved by increasing the wall thickness and the corrugation depth.

The water barrier 5 may be corrugated at its full length, or the water barrier may also comprise one or more sections of smooth metal tube where the corrugated metal tube and the smooth metal tube are connected in series to each other. The length of the corrugated and smooth sections may vary depending on the specific situation or environment where the dynamic high-voltage submarine cable is employed.

The top sections of a dynamic submarine power cable, ie. the sections 11a and 11b closest in figure 1 are the most fatigue affected portion of the dynamic submarine power cable due to the wave motion in the surface region of the body of water in which the dynamic submarine power cable is installed. The corrugated metal tube 30 of the water barrier 5 provides better fatigue resistance properties than a smooth metal tube, and the dynamic submarine high-voltage cable can be installed such that the corrugated metal tube 30 extends along one or both the top sections of the dynamic submarine high-voltage cable. Further down in the water column, the dynamic submarine high-voltage cable is much less affected by wave motion but at larger depths the hydrostatic pressure could affect the shape of a corrugated metal tube. Therefore, in some embodiments, the smooth metal tube forms the bottom section of the dynamic submarine power cable to better withstand the ambient hydrostatic pressure without any deformation of the water barrier at larger water depths. In one example, the corrugated metal tube constitutes 10% of the length of the dynamic submarine high-voltage cable.

In other installations, there may be several alternating sections of corrugated and smoot metal tubes along the length of the dynamic high-voltage submarine cable.

The corrugated and smoot metal tubes are connected to each other via a transition section to avoid introducing weaknesses in the water barrier.

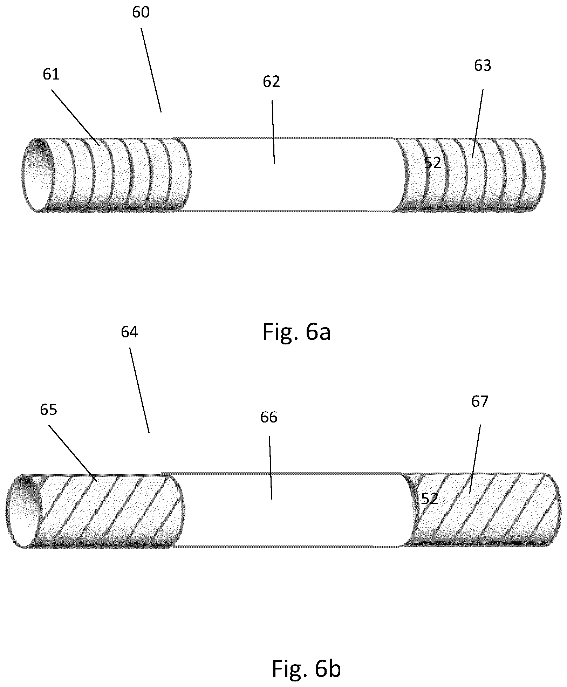

Figure 6a and figure 6b illustrate schematically two water barriers 60, 64, where each comprise two sections 61, 63 and 65, 67 of corrugated metal tube arranged at each end of the water barriers 60. 65. The water barrier 60 of figure 6a comprises two sections 61, 63 of annual corrugated metal tube, and one section 62 arranged therebetween of smooth metal tube. The water barrier 64 in figure 6b comprises two sections 65, 67 of helical corrugated metal tube, and one section 66 of smooth metal tube arranged between the two sections 65, 67 of corrugated metal tube.

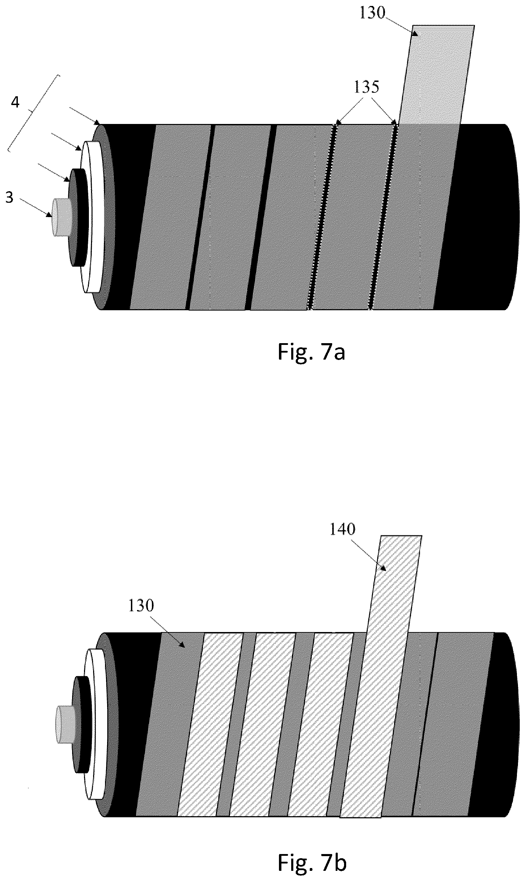

The water barrier 60, 64 may also comprise a laminate tape to further improve the water imperviousness. The laminate tape can for example comprise a laminate structure of metal and polymer. Figure 7a and 7b illustrate the process of applying laminate tape comprising a first layer made of an adhesive polymer material and a second layer made of metal.

The laminate tape may be corrugated or smooth as discussed above. When the water barrier comprises both corrugated and smooth sections, the laminate tape may be correspondingly corrugated and smooth, or may be corrugated or smooth over the complete length of the dynamic high-voltage submarine cable.

As shown in fig. 7, a metallic tape 130 is helically wound around the insulation system 4 outside the electrical conductor 3. Typically, this metallic tape 130 may be a copper tape, preferably made of pure Cu or a CuNiSi-alloy, a titan tape, preferably made of pure Ti or a Ti-alloy or a tin tape, preferably made of commercially pure Sn or a Sn-alloy. Here the tape is intended to be wound so that two consecutives turns of the tape 130 will be adjacent to each other without gap in between, however a small gap 135 between two adjacent tape turns is to be expected during production. However, this gap should not exceed 50% of the width of the tape 130.

A laminate tape 140 is then wrapped helically around the cable, on top of the metallic tape 130. It is important in this step that the potential gap between two turns of metallic tape 130 is covered by the laminate tape 140. Some surface of the metallic tape 130 is left uncovered by the laminate tape 140. This can be achieved by using a laminate tape 140 comprising a plurality of apertures and/or by intentionally leaving a gap between two turns of the laminate tape 140, as illustrated in figure 7b.

The laminate tape may be arranged outside or inside the corrugated metal tube.

## Claims

1. A dynamic high-voltage submarine cable, comprising

   - at least one cable core comprising an electrical conductor and an electrically insulating layer (4) radially surrounding the electrical conductor (3), and
   - a water barrier radially surrounding the cable core (2),

   wherein the water barrier comprises a corrugated metal tube (10) and a smooth metal tube, where the corrugated metal tube and the smooth metal tube are connected in series to each other along the axis of the dynamic high-voltage submarine cable by means of a transition section and where the corrugated metal tube has an inner diameter (20) larger than 90mm and a corrugation pitch (p) in a range of 4 - 12 mm, **characterized in that** the corrugated metal tube has a wall thickness (T) in a range of 0.1 - 1,2 mm and a corrugation depth (d) of more than 5 mm.

2. A dynamic high-voltage submarine cable according to claim 1, wherein the corrugated metal tube has an inner diameter larger than 90 mm, a corrugation pitch (p) of 7-9 mm, a wall thickness of 0,4-0,8 mm and a corrugation depth (d) of more than 5 mm.

3. A dynamic high-voltage submarine cable according to claim 1, wherein the corrugated metal tube has an inner diameter larger than 100 mm, a corrugation pitch (p) in a range of 4 - 12 mm, a wall thickness (T) in a range of 0.5 - 1,2 mm and a corrugation depth (d) of more than 5 mm.

4. A dynamic high-voltage submarine cable according to claim 1, where the ratio of the inner diameter (Di) to the corrugation pitch (p) of the corrugated metal tube is >6.

5. A dynamic high-voltage submarine cable according to claim 1, where the ratio of the inner diameter (Di) to the corrugation depth (d) of the corrugated metal tube is <20.

6. 5. A dynamic high-voltage submarine cable according to claim 1, where the ratio of the inner diameter (Di) to the corrugation depth (d) of the corrugated metal tube is <16.

7. A dynamic high-voltage submarine cable according to one of the previous claims, wherein the water barrier comprises a laminate tape comprising a first layer made of an adhesive polymer material and a second layer made of metal.

8. A dynamic high-voltage submarine cable according to claim 7, where the laminate tape is corrugated.

9. A dynamic high-voltage submarine cable according to one of the previous claims, further comprising an outer sheath radially surrounding the water barrier, where the outer sheath is corrugated.

10. A dynamic high-voltage submarine cable according to claim 9, comprising a filler material between the water barrier and the outer sheath.

11. A dynamic high-voltage submarine cable according to one of the previous claims, wherein the length of the corrugated metal tube is 10% of the total length of the cable.

12. A dynamic high-voltage submarine cable according to one of the previous claims, wherein the length of the corrugated metal tube is less than the total length of the cable and the corrugated metal tube is located near at least one end of the cable.

13. A method for producing a dynamic high-voltage submarine cable comprising

    - at least one cable core comprising an electrical conductor and an electrically insulating layer (4) radially surrounding the electrical conductor (3), and
- a water barrier comprising a metal tube (10) with an inner diameter (20) larger than 90mm and a wall thickness (T) in a range of 0.1 - 1,2 mm radially surrounding the cable core (2),

wherein the method comprises:
corrugating at least a section of the metal tube (10) with a corrugation pitch (p) in a range of 4 - 12 mm, and a corrugation depth (d) of more than 5 mm and connecting at least one section of smooth metal tube in series to the corrugated section at other along the axis of the dynamic high-voltage submarine cable by means of a transition section.

Fig. 1

Fig. 2

Fig. 3

Fig. 4a

Fig. 4b

Corrugation Dimensions

Fig. 5

60

61
62
63

52

Fig. 6a

64

65
66
67

52

Fig. 6b

Fig. 7a

Fig. 7b

Europäisches
Patentamt

European
Patent Office

Office européen
des brevets

## EUROPEAN SEARCH REPORT

**Application Number**

EP 25 20 0245

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 4 350 717 A1 (NKT HV CABLES AB [SE]) 10 April 2024 (2024-04-10) <br> * claims 3,12 * <br> * the whole document * <br> ----- | 1-13 | INV. <br> H01B7/282 |
| Y | US 2023/335310 A1 (JOHANSON AUDUN [NO]) 19 October 2023 (2023-10-19) <br> * claim 7 * <br> * paragraph [0013]; claim 2 * <br> * paragraph [0015] * <br> * the whole document * <br> ----- | 1-13 | |
| Y | EP 4 425 728 A1 (NKT HV CABLES AB [SE]) 4 September 2024 (2024-09-04) <br> * claim 6 * <br> * the whole document * <br> ----- | 1-13 | |

| | |
|---|---|
| | TECHNICAL FIELDS SEARCHED (IPC) |
| | H01B <br> H05B |

The present search report has been drawn up for all claims

| Place of search | Date of completion of the search | Examiner |
|---|---|---|
| The Hague | 13 April 2026 | Yildirim, Zeynep |

EPO FORM 1503 03.82 (P04C01)

## ANNEX TO THE EUROPEAN SEARCH REPORT
## ON EUROPEAN PATENT APPLICATION NO.

EP 25 20 0245

This annex lists the patent family members relating to the patent documents cited in  the above-mentioned European search report.
The members are as contained in the European Patent Office EDP file on
The European Patent Office is in no way liable for these particulars which are merely given for the purpose of information.

13-04-2026

| Patent document cited in search report | | Publication date | Patent family member(s) | | Publication date |
|---|---|---|---|---|---|
| EP 4350717 | A1 | 10-04-2024 | CA | 3215205 A1 | 04-04-2024 |
| | | | EP | 4350717 A1 | 10-04-2024 |
| | | | JP | 2024054085 A | 16-04-2024 |
| | | | KR | 20240047320 A | 12-04-2024 |
| | | | US | 2024112832 A1 | 04-04-2024 |
| US 2023335310 | A1 | 19-10-2023 | CN | 116741449 A | 12-09-2023 |
| | | | EP | 4243038 A1 | 13-09-2023 |
| | | | US | 2023335310 A1 | 19-10-2023 |
| EP 4425728 | A1 | 04-09-2024 | CA | 3230047 A1 | 25-04-2025 |
| | | | EP | 4425728 A1 | 04-09-2024 |
| | | | JP | 2024125277 A | 18-09-2024 |
| | | | KR | 20240133648 A | 04-09-2024 |
| | | | US | 2024355506 A1 | 24-10-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2896053 A

- EP 4350717 A